# FASCICULE DE BREVET EUROPEEN

(11) **EP 2 480 595 B1**
(45) Date de publication et mention de la délivrance du brevet: **24.10.2018**
(21) Numéro de dépôt: 10769020.8
(22) Date de dépôt: 23.09.2010
(51) Int. Cl.: C08J 3/22, C08J 3/12, C08K 3/04, C09K 8/03, C09K 8/04, C09K 8/32, C09K 8/36, C08J 5/00

(54) **MÉLANGE-MAÎTRE POUR LA FABRICATION DE FLUIDE DE FORAGE**
MASTERBATCH ZUR HERSTELLUNG EINER BOHRFLÜSSIGKEIT
MASTERBATCH FOR MANUFACTURING A DRILLING FLUID

(30) Priorité: 25.09.2009 FR 0956637; 30.09.2009 US 247186 P
(43) Date de publication de la demande: 01.08.2012
(73) Titulaire: Arkema France, 92700 Colombes (FR)
(72) Inventeur: KORZHENKO, Alexander, F-64000 Pau (FR); HAVEL, Mickael, Wayne PA 19087 (US); BLUTEAU, Catherine, F-64000 PAU (FR)
(74) Mandataire: Bonnel, Claudine
(86) Numéro de dépôt international: PCT/FR2010/051996
(87) Numéro de publication internationale: WO 2011/036411

(56) Documents cités:
- EP-A1- 1 995 274
- WO-A1-03/050332
- WO-A1-2005/037966
- WO-A2-2005/060648
- WO-A2-2006/076728
- WO-A2-2009/030868
- FR-A1- 2 893 946
- JP-A- 2007 231 219
- US-A1- 2007 293 405

## Description

La présente invention concerne un mélange-maître à base huileuse renfermant des nanotubes de carbone, son procédé de préparation et son utilisation pour la fabrication d'un fluide viscoélastique, destiné au forage dans des formations souterraines.

Les fluides de forage, également appelés boues de forage, sont des fluides complexes utilisés pour le forage des puits pétroliers. Ils sont injectés, généralement en continu, via le train de tiges dans le trou de forage. Leurs fonctions multiples comprennent par exemple le transport des déblais rocheux jusqu'à la surface, le maintien dans le trou de forage d'une pression hydrostatique suffisante pour prévenir l'effondrement de la formation rocheuse traversée, ou encore la lubrification et le refroidissement de la tête de forage. Il y a principalement deux familles de boues de forage : les boues à base d'huile (généralement des émulsions inverses de saumure dans une phase d'huile) et les boues à base d'eau.

Le maintien d'une pression hydrostatique suffisante, pour compenser la pression latérale de la formation rocheuse traversée par le puits de forage, nécessite l'augmentation progressive de la densité du fluide de forage au fur et à mesure que le forage avance vers les zones profondes. Cette augmentation de la densité est obtenue par addition d'agents alourdissants (en anglais *weighting agents*), c'est-à-dire de matériaux solides finement broyés, de densité importante et insolubles dans le fluide de forage. Plus la profondeur des puits de forage est importante, plus la quantité et/ou la densité de l'agent alourdissant utilisé augmentent, et plus le système de maintien en suspension de l'agent alourdissant dans le fluide de forage doit être efficace.

En effet, la décantation de l'agent alourdissant, par exemple lors de l'arrêt provisoire de l'injection de boue, peut avoir des conséquences désastreuses telles qu'un bouchage du puits ou encore une diminution locale de la pression hydrostatique de la colonne de fluide aboutissant à l'effondrement du puits.

Le maintien en suspension de l'agent alourdissant est typiquement assuré par des agents de viscosité, choisis classiquement parmi les argiles, organophiles ou non, et les polymères organiques solubles dans le fluide de forage. Or, au-delà d'une certaine profondeur de forage, lorsque le système de maintien en suspension de l'agent alourdissant doit être particulièrement efficace, les polymères organiques subissent une dégradation due aux températures élevées qui règnent à ces profondeurs et deviennent partiellement ou totalement inefficaces.

Le problème de la dégradation thermique des polymères organiques ne peut pas non plus être résolu par leur remplacement par des argiles. Les argiles utilisées classiquement en tant qu'agents épaississants (bentonite, montmorillonite, attapulgite, argiles organophiles) résistent, certes, à des températures nettement plus élevées que les polymères organiques, mais pour le forage à grande profondeur la quantité d'argile nécessaire pour maintenir en suspension des quantités importantes d'agent alourdissant très dense est considérable. Les boues de forage présentent alors une teneur en solides excessivement élevée qui pose des problèmes de maintien en circulation des boues dus à une viscosité excessive.

Les systèmes utilisés actuellement, qu'ils soient à base de polymères ou d'argiles, ne permettent malheureusement pas d'assurer un maintien en suspension de l'agent alourdissant au-delà d'une température d'environ 250 °C.

Pour pallier ces inconvénients des agents épaississants classiques, la Demanderesse a proposé dans la demande WO 2009/030868 de leur substituer en tout ou partie des nanotubes de carbone (ou NTC) ayant un diamètre moyen et une surface spécifique particuliers. Ceux-ci présentent une excellente stabilité à chaud et permettent de maintenir en suspension des quantités importantes d'agent alourdissant très dense, tel que la baryte ou la calcite, sans pour autant conférer au fluide de forage une viscosité excessive qui nuirait notamment à sa facilité de pompage.

Comme préconisé dans ce document, il est souhaitable que la composition de ce fluide de forage soit modifiée au cours du procédé de forage, en augmentant progressivement la teneur en NTC au fur et à mesure de l'augmentation de la profondeur de forage, de la température de forage et/ou de la pression de forage. Toutefois, les NTC sont introduits dans le fluide de forage sous une forme pulvérulente, forme peu aisée à manipuler pour les fabricants des boues de forage ; en outre, leur dosage est difficile et leur manipulation est susceptible d'entraîner leur dispersion dans l'environnement, nécessitant l'utilisation de systèmes complexes de hottes, filtres, mises en dépression des locaux, et autres systèmes limitant leur dispersion.

Il serait donc souhaitable de disposer d'un moyen permettant de surmonter cet inconvénient tout en assurant une dispersion facile des nanotubes de carbone dans la base liquide du fluide de forage.

La Demanderesse a eu le mérite de mettre au point un mélange-maître sous forme solide, renfermant une quantité élevée de nanotubes de carbone et au moins une huile, qui permet de satisfaire ce besoin.

Le document US-4 735 733 enseigne, certes, des compositions huileuses à haute teneur en NTC. Il s'agit toutefois de graisses renfermant de 5 à 15% en poids de nanotubes de carbone, ayant un diamètre moyen de 50 à 200 nm et une surface spécifique inférieure à 190 m²/g, associés à une huile lubrifiante, telle qu'une huile minérale, ayant une viscosité cinématique d'au moins 25 mm²/s. Ces graisses, qui se présentent sous forme de gel viscoélastique à température ambiante, ne sont ni explicitement destinées, ni adaptées, à être utilisées comme mélanges-maîtres de NTC, pour la fabrication de fluides de forage.

D'autres compositions renfermant des NTC associés à une huile sont divulguées dans les documents FR 2 893 946, WO 03/050332, WO 2005/060648, WO 2005/037966, WO 2006/076728, EP 1 995 274, JP2007-231219 et US 2007/293405. Dans ces documents, dont aucun n'a trait au domaine du forage pétrolier, les compositions renfermant des taux élevés de NTC ne se présentent pas sous forme de granulés ou renferment une résine en plus des NTC et de l'huile (silicone ou chloroparaffine). En particulier, le document FR 2 893 946 décrit des compositions pulvérulentes caractérisées par une taille moyenne inférieure au millimètre et moins de 10% de taille inférieure à 40 microns. Ces données caractérisent une poudre compactée comportant une répartition de particules qui n'a pas la forme finale de granulés. Ces compositions ne sont donc pas non plus adaptées à une utilisation comme mélange-maître dans la fabrication de fluides de forage.

La présente invention a précisément pour premier objet un mélange-maître sous forme de granulés, comprenant au moins une huile, choisie parmi une liste donnée, et plus de 3% en poids de nanotubes de carbone ayant un diamètre moyen, mesuré par microscopie électronique en transmission, compris entre 5 et 30 nm et une surface spécifique, déterminée par la méthode BET par adsorption d'azote, supérieure à 200 m²/g, de préférence comprise entre 200 m²/g et 350 m²/g. Les huiles utilisables selon l'invention sont choisies parmi : les huiles végétales à forte teneur, en particulier comprenant au moins 50% de triglycérides constitués d'esters d'acides gras et de glycérol ; les huiles de synthèse de formule R5COOR6 dans laquelle R5 représente un groupe aryle ou le reste d'un acide gras supérieur, linéaire ou ramifié, comportant de 7 à 30 atomes de carbone et R6 représente une chaîne hydrocarbonée, ramifiée ou non, éventuellement hydroxylée, contenant de 3 à 30 atomes de carbone ; l'éther de pétrole ; les alcools gras, linéaires ou ramifiés, saturés ou insaturés, en C6 à C26 ; les hydrocarbures linéaires ou ramifiés ; les hydrocarbures cycliques ; les hydrocarbures aromatiques ; les perfluoralcanes en C8 à C24 ; les huiles fluorosiliconées ; et leurs mélanges.

Ces mélanges-maîtres permettent de résoudre notamment les inconvénients ci-dessus. Ils permettent un dosage précis des NTC par le fabricant de boues et une manipulation aisée sans faire intervenir de système complexe anti-dispersion.

Les nanotubes de carbone utilisés dans la présente invention sont connus. Il s'agit de structures cristallines particulières, de forme tubulaire, creuses, de rapport longueur moyenne/diamètre moyen supérieur à 1 et composées d'un ou plusieurs feuillets (appelés parois) de graphite, enroulés de façon co-axiale selon l'axe longitudinal des nanotubes. On distingue ainsi les nanotubes monoparois (*Single Wall Nanotubes* ou *SWNT*) et les nanotubes multiparois (*Multi Wall Nanotubes* ou *MWNT*). Selon l'invention, on utilise avantageusement des NTC multiparois ; ils peuvent par exemple comprendre de 3 à 15 feuillets et plus préférentiellement de 5 à 10 feuillets.

Comme indiqué ci-dessus, les NTC utilisés dans la présente invention ont un diamètre moyen, mesuré par microscopie électronique en transmission, compris entre 5 et 30 nm, de préférence allant de 8 à 15 nm. Leur longueur moyenne est avantageusement comprise entre 0,1 et 10 µm. Le rapport longueur moyenne/diamètre moyen est avantageusement supérieur à 10 et le plus souvent supérieur à 100.

La surface spécifique des NTC utilisés dans la présente invention, déterminée par la méthode BET par adsorption d'azote, est supérieure à 200 m²/g et de préférence comprise entre 200 m²/g et 350 m²/g, par exemple entre 200 m²/g et 250 m²/g. Leur densité apparente non tassée est de préférence comprise entre 0,03 et 0,5 g/cm³ et en particulier entre 0,05 et 0,2 g/cm³. Cette densité apparente est le rapport d'une masse donnée de nanotubes de carbone, rapportée au volume de cette même masse, mesuré après trois renversements successifs d'une éprouvette contenant lesdits nanotubes.

Les nanotubes de carbone de faible diamètre moyen et de surface spécifique importante, utilisés dans la présente invention peuvent notamment être préparés selon les procédés de synthèse décrits dans la demande internationale WO2006/082325.

Des nanotubes de carbone bruts, c'est-à-dire non modifiés chimiquement, présentant les caractéristiques techniques ci-dessus, sont en outre disponibles sur le marché auprès de la société ARKEMA sous la dénomination commerciale Graphistrength® C100.

Selon l'invention, les nanotubes peuvent être purifiés et/ou oxydés et/ou broyés, avant incorporation dans le mélange-maître de la présente invention.

Le broyage des NTC peut être mis en oeuvre, à chaud ou à froid, dans des appareils tels que broyeurs à boulets, à marteaux, à meules, à couteaux, jet de gaz ou tout autre système de broyage susceptible de réduire la taille du réseau enchevêtré de NTC. On préfère que cette étape de broyage soit pratiquée selon une technique de broyage par jet de gaz et en particulier dans un broyeur à jet d'air.

La purification des NTC bruts ou broyés peut être réalisée par lavage à l'aide d'une solution d'acide sulfurique, de manière à les débarrasser d'éventuelles impuretés minérales et métalliques résiduelles, provenant de leur procédé de préparation. Le rapport pondéral des NTC/acide sulfurique utilisé pour ce lavage peut être compris entre 1:2 et 1:3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des NTC purifiés.

L'oxydation des NTC bruts, broyés et/ou purifiés peut être réalisée par mise en contact des nanotubes avec une solution d'hypochlorite de sodium, par exemple dans un rapport pondéral des NTC/hypochlorite de sodium allant de 1:0,1 à 1:1, de préférence à température ambiante. Cette opération d'oxydation est avantageusement suivie d'étapes de filtration et/ou de centrifugation, de lavage et de séchage des NTC oxydés.

Les NTC utilisés dans la présente invention peuvent être modifiés chimiquement par introduction de groupes fonctionnels via des liaisons covalentes. Ces groupes fonctionnels, tels que des groupes sulfate, sulfonate, carboxyle, benzènesulfonate, amine éventuellement quaternisée, ou encore des groupes obtenus par polymérisation de monomères à la surface des NTC, améliorent généralement la dispersibilité des nanotubes dans l'eau ou les solvants organiques.

En outre, les NTC peuvent être soumis à un traitement thermique d'au moins 900°C et, mieux, d'au moins 1000°C, en vue d'éliminer les traces métalliques de leur catalyseur de synthèse, éventuellement présentes.

Dans la présente invention, on utilisera de préférence des NTC non modifiés.

Le mélange-maître selon l'invention contient plus de 3% en poids, par rapport au poids total du mélange, et généralement de 10% à moins de 60% en poids, de nanotubes de carbone, de préférence de 10 à 55% en poids, et plus préférentiellement encore de 15 à 50% en poids, de nanotubes de carbone.

L'huile incluse dans le mélange-maître selon l'invention est définie comme un milieu, liquide à température ambiante (25°C) et pression atmosphérique, non miscible à l'eau (formation de 2 phases visibles à l'oeil nu à température ambiante et pression atmosphérique). Ce milieu liquide présente notamment une solubilité dans l'eau, mesurée selon la méthode OECD TG 105, inférieure ou égale à 1 mg/l. Ce milieu liquide peut être plus ou moins visqueux ; en particulier, il présente une viscosité dynamique à température ambiante comprise entre 0,1cp et 500cp et de préférence entre 0,3 et 300cp.

Selon l'invention, on peut utiliser une ou plusieurs huiles généralement miscibles entre elles. Ces huiles peuvent être polaires ou, mieux, apolaires.

Des exemples d'huiles convenant à une utilisation dans la présente invention comprennent :
- les huiles végétales à forte teneur (par exemple au moins 50% en poids) en triglycérides constitués d'esters d'acides gras et de glycérol, dont les acides gras peuvent avoir des longueurs de chaînes variées, ces dernières pouvant être linéaires ou ramifiées, saturées ou insaturées ; ces huiles sont notamment les huiles de germe de blé, de maïs, de tournesol, de lin, de karité, de ricin, d'amandes douces, de macadamia, d'abricot, de soja, de coton, de luzerne, de pavot, de potimarron, de sésame, de courge, d'avocat, de noisette, de pépins de raisin ou de cassis, d'onagre, de millet, d'orge, de quinoa, d'olive, de seigle, de carthame, de bancoulier, de passiflore, de rosier muscat ; ou encore les triglycérides des acides caprylique /caprique ;
- les huiles de synthèse de formule R5COOR6 dans laquelle R5 représente un groupe aryle ou le reste d'un acide gras supérieur, linéaire ou ramifié, comportant de 7 à 30 atomes de carbone et R6 représente une chaîne hydrocarbonée, ramifiée ou non, éventuellement hydroxylée, contenant de 3 à 30 atomes de carbone, comme par exemple l'huile de PurCellin® (octanoate de l'alcool cétostéarylique), l'isononanoate d'isononyle, le benzoate d'alcools en C12 à C15, le benzoate d'isostéaryle, le myristate d'isopropyle, des octanoates, décanoates ou ricinoléates d'alcools ou de polyalcools ;
- les éthers de synthèse comme l'éther de pétrole ;
- les alcools gras, linéaires ou ramifiés, saturés ou insaturés, en C6 à C26 comme l'alcool oléique ou l'octyl dodécanol ;
- éventuellement, les huiles siliconées telles que les polydiméthylsiloxanes, liquides à température ambiante ; les polydiméthylsiloxanes comportant des groupements alkyle ou alcoxy, pendants et/ou en bout de chaîne siliconée, groupements ayant de 2 à 24 atomes de carbone ; les silicones phénylées comme les phényl triméthicones, les phényl diméthicones, les phényl triméthylsiloxy diphénylsiloxanes, les diphényl diméthicones, les diphényl méthyldiphényl trisiloxanes ;
- les huiles d'origine minérale comme les hydrocarbures linéaires ou ramifiés, tels que les huiles de paraffine et de ses dérivés, éventuellement raffinées, la vaseline, les polydécènes, le polyisobutène hydrogéné tel que le Parleam®, le squalane ;
- les hydrocarbures cycliques comme les (alkyl)cycloalcanes et les (alkyl)cycloalcènes dont la chaîne alkyle est linéaire ou ramifiée, saturée ou non, ayant de 1 à 30 atomes de carbone, tels que le cyclohexane, le dioctylcyclohexane, le 2,4-diméthyl-3-cyclohexène et le dipentène ;
- les hydrocarbures aromatiques comme le benzène, le toluène, le p-cymène, le naphtalène, l'anthracène ;
- les huiles fluorées comme les perfluoralcanes en C8 à C24 ;
- les huiles fluorosiliconées ;
et leurs mélanges.

On préfère utiliser une huile minérale, comme une huile de paraffine telle que celles commercialisées par Shell sous la marque Sarapar® ou celle commercialisée par TOTAL sous la dénomination commerciale EDC® 99-DW ou EDC® 95-11 ; cette huile présente une viscosité de 3,5 cps. En variante, on peut utiliser une huile paraffinique raffinée, ayant une teneur en composés aromatiques polycycliques inférieure à 3% en poids (déterminée par extraction au DMSO selon la méthode IP 346) et une température de transition vitreuse inférieure à -45°C, par exemple de -58°C ± 3°C (telle que déterminée selon la norme ASTM E 1356). Des huiles raffinées de ce type sont notamment :
- les MES, produites par extraction au solvant de distillats lourds de pétrole ou par traitement de ces distillats avec de l'hydrogène en présence de catalyseur (hydrotraitement),
- les TDAE, qui sont des extraits aromatiques traités de distillats traités.

Des exemples de telles huiles sont notamment commercialisés par SHELL sous la dénomination commerciale Catenex® SNR, par EXXON MOBIL sous la dénomination commerciale Flexon® 683, par TOTAL sous la dénomination commerciale Plaxolene® MS ou par H&R European sous la dénomination Vivatec® 500.

Bien que les huiles ci-dessus soient préférées, il est éventuellement possible d'utiliser des huiles plus visqueuses, appelées souvent graisses. La taille des NTC et leur surface spécifique permettent la fabrication de mélanges-maître à basse de graisse, appropriés au forage pétrolier contrairement aux NTC préconisés dans l'art antérieur.

Des exemples de graisses sont notamment :
- les graisses industrielles, telles que celles au sulfonate de calcium complexe, disponibles notamment dans la gamme CERAN ou sous la référence AXA GR1 auprès de la société TOTAL ;
- les graisses de spécialité, telles que les graisses semi-synthétiques, les graisses à base de bentone, renfermant éventuellement des composés fluorés, les graisses à savon lithium / calcium et les graisses renfermant du cuivre, en particulier celles disponibles auprès de la société TOTAL sous les dénominations commerciales MARSON SY 00 et SY 2, SPECIS CU, CALORIS 23 et MS23, STATERMIC XHT et NR, TIFORA PG, BIOMULTIS SEP 2, MULTIS COMPLEX HV2 ; et
- leurs mélanges.

Les huiles peuvent représenter de 40 à 96,9% en poids, de préférence de 45 à 90% en poids et, mieux, de 50 à 70% en poids, par rapport au poids du mélange-maître.

Selon l'invention, outre les NTC et l'huile, le mélange-maître selon l'invention peut renfermer des additifs tels que des agents viscosifiants, des sels, notamment de triéthanolamine, présents en faible quantité, c'est-à-dire représentant au total, par exemple, de 0 à 10% en poids, par rapport au poids du mélange-maître.

Les agents viscosifiants peuvent être choisis parmi les homopolymères et copolymères épaississants, les copolymères pouvant être aléatoires, statistiques ou à blocs, les oligomères épaississants, les tensioactifs et leurs mélanges.

Des exemples de polymères épaississants sont ceux utilisés classiquement dans les fluides de forage, et l'on peut citer à titre d'exemples la gomme de guar, l'hydroxypropylguar, le carboxyméthylguar, l'hydroxy-propylcellulose, l'hydroxyéthylcellulose, la carboxy-méthylcellulose sodique, la gomme de xanthane, l'amidon, les polyacrylates, le poly(chlorure de diallyl-diméthylammonium) et leurs mélanges.

Les tensioactifs peuvent être choisis parmi tous les tensioactifs non-ioniques, anioniques, cationiques, amphotères ou zwitterioniques susceptibles de former des micelles (sphériques, cylindriques, tubulaires ou d'autres formes) au-delà d'une certaine concentration, dite concentration micellaire critique. Des exemples de tels tensioactifs sont donnés dans la demande EP 1 634 938.

L'invention concerne également un procédé de préparation du mélange-maître selon le premier ou le second mode de réalisation de l'invention.

Ce procédé comprend les étapes consistant à :
(a) introduire puis malaxer les nanotubes et ladite au moins une huile, dans un dispositif de compoundage, pour obtenir un composite,
(b) extruder puis refroidir ledit composite de façon à obtenir un mélange-maître sous forme solide,
(c) mettre en forme ledit mélange-maître pour obtenir des granulés.

Il est bien entendu que le procédé ci-dessus peut comprendre d'autres étapes préliminaires, intermédiaires ou subséquentes, en plus de celles mentionnées précédemment. Ainsi, il peut notamment comprendre une étape préliminaire de mélange des nanotubes et de l'huile, soit dans l'appareil de compoundage, soit à l'aide d'un dispositif mélangeur indépendant.

Les dispositifs de compoundage sont bien connus de l'homme du métier. Ils sont classiquement utilisés dans l'industrie des matières plastiques pour le mélange à l'état fondu de polymères thermoplastiques et d'additifs en vue de produire des composites. Ces dispositifs comprennent généralement des moyens d'alimentation, notamment au moins une trémie pour les matériaux pulvérulents (ici, les NTC) et/ou au moins une pompe d'injection pour les matériaux liquides (ici, l'huile) ; des moyens de malaxage à fort cisaillement, par exemple une extrudeuse à double vis co-rotative ou contre-rotative (par exemple une micro-extrudeuse de DSM) ou un co-malaxeur, comprenant habituellement une vis sans fin disposée dans un fourreau (tube) chauffé ; une tête de sortie qui donne sa forme au matériau sortant ; et des moyens de refroidissement, sous air ou à l'aide d'un circuit d'eau, du matériau. Celui-ci se trouve généralement sous forme de jonc sortant en continu du dispositif et qui peut être découpé ou mis sous forme de granulés, après refroidissement. D'autres formes peuvent toutefois être obtenues en adaptant une filière de la forme voulue sur la tête de sortie.

Selon les inventeurs, la forme solide serait due à une adsorption de l'huile par les NTC.

Des exemples de co-malaxeurs utilisables selon l'invention sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion.

Les co-malaxeurs utilisables selon l'invention ont de préférence un rapport de vis L/D allant de 7 à 22, par exemple de 10 à 20, tandis que les extrudeuses corotatives ont avantageusement un rapport L/D allant de 15 à 56, par exemple de 20 à 50.

L'étape de compoundage est généralement mise en oeuvre à température proche (par exemple ± 5°C) de la température ambiante (25°C).

Le mélange-maître selon l'invention, obtenu par exemple selon le procédé décrit ci-dessus, peut être dilué dans une base liquide destinée à la fabrication d'un fluide de forage.

La présente invention a donc également pour objet l'utilisation du mélange-maître décrit précédemment pour la fabrication d'un fluide viscoélastique de forage dans des formations rocheuses souterraines, comprenant le mélange dudit mélange-maître avec une base liquide aqueuse et/ou organique et éventuellement au moins un agent alourdissant sous forme particulaire.

La présente invention a encore pour objet un procédé de fabrication d'un fluide viscoélastique de forage dans des formations rocheuses souterraines, comprenant le mélange du mélange-maître décrit précédemment avec une base liquide aqueuse et/ou organique et éventuellement au moins un agent alourdissant sous forme particulaire.

Le mélange-maître peut être introduit dans la base liquide contenant éventuellement l'agent alourdissant en suspension. Plus particulièrement, selon une forme d'exécution de l'invention, le mélange maître est incorporé directement dans la formulation finale du fluide viscoélastique de forage. On préfère toutefois que l'agent alourdissant soit ajouté à la base liquide après introduction du mélange-maître dans celle-ci.

L'introduction de NTC dans une base liquide pour fluide de forage (ou boue) se fait aisément en utilisant le mélange-maître de l'invention, à l'inverse d'une introduction directe de NTC dans le fluide de forage, et notamment sur le site même de forage.

La base liquide peut en principe être n'importe quelle base utilisée classiquement dans des fluides de forage. Il peut s'agir par exemple d'une base aqueuse, avantageusement utilisée pour des raisons économiques et écologiques. Ces bases aqueuses contiennent de manière connue des sels hydrosolubles destinés principalement à augmenter la densité de la base. Les sels préférés comprennent des halogénures et formates de sodium, de potassium, de calcium, de zinc, de césium et des combinaisons de ceux-ci. On peut citer comme sels particulièrement préférés, le chlorure de calcium, le bromure de calcium, le formate de potassium, le formate de césium/potassium et des combinaisons de ceux-ci. Ces bases aqueuses peuvent contenir en outre de faibles fractions de solvants organiques miscibles à l'eau et/ou non miscibles à l'eau. Ceux-ci peuvent éventuellement se trouver dispersés sous forme de gouttelettes dans la base aqueuse pour former une dispersion/suspension ou une émulsion huile-dans-eau (H/E).

Dans les cas précités, l'introduction du mélange-maître dans la base aqueuse résulte en la formation d'un fluide de forage sous forme d'une suspension, dispersion ou d'une émulsion notamment huile-dans-eau (H/E).

En variante, il peut être intéressant, voire nécessaire, de limiter la teneur en eau des fluides de forage, par exemple lorsque le puits traverse des formations rocheuses contenant une fraction importante de composants hydrosolubles ou hydrodispersibles, susceptibles d'être emportés par le fluide. La base liquide peut alors être soit une huile, soit une suspension, dispersion ou une émulsion eau-dans-huile (E/H) contenant de préférence au plus 50 % en poids, en particulier au plus 20 % en poids d'eau. L'introduction du mélange-maître dans ces bases conduit alors, respectivement, à l'obtention d'un fluide de forage sous forme d'huile ou de dispersion ou encore d'émulsion multiple huile-dans-eau-dans-huile (H/E/H).

Lorsque la base liquide se trouve sous forme d'une dispersion ou d'une émulsion E/H ou H/E, la fabrication du fluide viscoélastique implique alors en outre l'introduction dans la base liquide d'au moins un agent tensioactif (émulsionnant E/H ou H/E, respectivement) ou d'un dispersant capable de stabiliser l'émulsion, respectivement la dispersion, qui peut être choisi parmi les tensioactifs non ioniques ou anioniques et représenter par exemple de 1 à 5% en poids, par rapport au poids total du fluide de forage.

L'huile constituant la base liquide ou bien l'huile formant la phase continue de la dispersion ou de l'émulsion eau-dans-huile ou la phase discontinue de la dispersion ou de l'émulsion huile-dans-eau, est de préférence une huile minérale, une huile fluorée, une huile diesel ou une huile synthétique, de préférence une huile minérale et notamment un mélange d'hydrocarbures ou une huile synthétique. On préfère généralement les huiles apolaires aux huiles polaires. Avantageusement, l'huile de la base liquide est identique à celle du mélange-maître. Une huile conventionnellement utilisée est par exemple une huile de paraffine comme le produit commercial EDC® 99-DW de la société TOTAL.

La base liquide décrite précédemment renferme par ailleurs éventuellement au moins un agent alourdissant. En principe, on peut utiliser en tant qu'agent alourdissant n'importe quel solide particulaire ayant une densité supérieure à celle de la base liquide, de préférence une masse volumique au moins égale à 2 g/cm³ et, pour les forages à grande profondeur, de préférence une masse volumique supérieure à 3 g/cm³, voire à 4 g/cm³. Ces agents alourdissants sont connus et sont choisis par exemple parmi la baryte (BaSO₄), la calcite (CaCO₃), la dolomite (CaCO₃.MgCO₃), l'hématite (Fe₂O₃), la magnétite (Fe₃O₄), l'ilménite (FeTiO₃) et la sidérite (FeCO₃). L'agent alourdissant utilisé de manière particulièrement préférée est la baryte.

La quantité d'agent alourdissant dépend essentiellement de la densité que l'on souhaite conférer au fluide de forage. Cette densité, et donc la quantité d'agent alourdissant utilisée, augmente en général progressivement avec la profondeur du puits de forage. Les fluides de forage de la présente invention sont de préférence destinés au forage à grande profondeur et ont par conséquent une densité relativement élevée, de préférence une densité globale au moins égale à 1,5, de préférence supérieure à 2,5. La limite supérieure de la teneur en agent alourdissant est déterminée essentiellement par les problèmes de viscosité qu'entraîne une teneur trop élevée en solides. De façon générale, l'agent alourdissant est utilisé dans le fluide de forage fabriqué selon la présente invention en une concentration comprise entre 10 et 70 % en poids, par exemple entre 20 et 50% en poids. Le pourcentage d'agent alourdissant est très variable en fonction de la densité recherchée.

La quantité de mélange-maître introduite dans les fluides de forage de la présente invention dépend, entre autres, de la quantité et de la densité de l'agent alourdissant utilisé, de la profondeur de forage, de la nature de la base liquide, et de l'absence ou de la présence d'autres agents épaississants dans le fluide de forage.

Cette quantité est de préférence telle que les nanotubes de carbone représentent de 0,1 % à 6% en poids, par exemple de 0,1% à 3 % en poids, rapporté au poids total du fluide de forage.

On préfère en outre selon l'invention que le mélange-maître et la base liquide soient soumis à un traitement mécanique, de préférence avant mélange avec l'agent alourdissant. Ce traitement peut être de nature quelconque, pour autant qu'il permette d'obtenir une dispersion homogène des NTC dans la base liquide. On préfère selon l'invention que ce traitement comprenne un traitement aux ultrasons ou un cisaillement de la dispersion mélange à l'aide d'un système rotor-stator ou à l'aide d'un mélangeur à pales.

Un tel système rotor-stator comprend généralement un rotor commandé par un moteur et pourvu de systèmes de guidage de fluide, perpendiculaires à l'axe du rotor, tels que des lames ou pales disposées sensiblement radialement ou un disque plat pourvu de dents périphériques, ledit rotor étant éventuellement pourvu d'une couronne dentée, et un stator disposé de façon concentrique par rapport au rotor, et à une faible distance à l'extérieur de celui-ci, ledit stator étant équipé sur au moins une portion de sa circonférence d'ouvertures, ménagées par exemple dans une grille ou définissant entre elles une ou plusieurs rangées de dents, qui sont adaptées au passage du fluide aspiré dans le rotor et éjecté par les systèmes de guidage vers lesdites ouvertures. Une ou plusieurs des dents précitées peuvent être pourvues d'arêtes vives. Le fluide est ainsi soumis à un cisaillement important, à la fois dans l'entrefer entre le rotor et le stator et au travers des ouvertures ménagées dans le stator.

Un exemple de système de rotor-stator est notamment commercialisé par la société SILVERSON sous la dénomination commerciale Silverson® L4RT. Un autre type de système rotor-stator est commercialisé par la société IKA-WERKE sous la dénomination commerciale Ultra-Turrax®. D'autres systèmes rotor-stator encore sont constitués des moulins colloïdaux, des turbines défloculeuses et des mélangeurs à fort cisaillement de type rotor-stator, tels que les appareils commercialisés par la société IKA-WERKE ou par la société ADMIX.

On préfère selon l'invention que la vitesse du rotor soit réglée à au moins 1.000 tours/min et de préférence à au moins 3000 tours/min voire à au moins 5.000 tours/min, par exemple pendant 5 à 15 minutes. En outre, on préfère que la largeur de l'entrefer entre le rotor et le stator soit de moins de 1 mm et de préférence de moins de 200 pm, plus préférentiellement de moins de 100 µm et, mieux, de moins de 50 µm voire de moins de 40 µm. Par ailleurs, le système rotor-stator utilisé selon l'invention confère avantageusement un cisaillement de 1.000 à 10⁹ s⁻¹.

Dans un mode de réalisation particulier de la présente invention, les NTC constituent le seul agent épaississant, c'est-à-dire que le fluide de forage est essentiellement exempt d'autres agents épaississants connus tels que les polymères organiques, les acides gras, les argiles ou les systèmes épaississants à base d'agents tensioactifs et d'électrolytes tels que ceux décrits dans EP 1 634 938. La concentration des NTC dans le fluide de forage est alors relativement élevée, de préférence comprise entre 1 et 6 % en poids, et en particulier entre 1,5 et 3 % en poids, par rapport au poids du fluide viscoélastique de forage. En effet, des expériences ont montré qu'en l'absence d'autres agents épaississants, le seuil d'écoulement des fluides de forage augmente de manière spectaculaire au-delà d'une valeur minimale de l'ordre de 1 % en poids de NTC.

Les nanotubes de carbone sont également utiles pour renforcer l'effet de systèmes épaississants classiques, par exemple des systèmes épaississants à base de polymères. Dans un autre mode de réalisation de la présente invention, les fluides de forage obtenus selon la présente invention contiennent ainsi en outre un ou plusieurs polymères organiques solubles dans la phase aqueuse et/ou dans la phase huileuse de la base liquide. La concentration de NTC est alors de préférence comprise entre 0,1 et 1 % en poids, par rapport au poids du fluide viscoélastique de forage.

Le fluide de forage obtenu à partir du mélange-maître selon l'invention est destiné à être utilisé dans un procédé de forage dans des formations rocheuses souterraines.

Grâce à l'excellente résistance thermique des NTC utilisés selon l'invention, ces derniers sont particulièrement appropriés pour le forage à grande profondeur, c'est-à-dire dans des conditions de haute température - généralement supérieure ou égale à 200 °C, en particulier supérieure à 250 °C - et de haute pression - généralement supérieure à 10 000 Psi pour un puits HTHP, et même supérieure à 30 000 Psi pour un puits extrême HTHP.

Au cours du forage, il est possible de remplacer progressivement un ou plusieurs agents épaississants présents dans le fluide, choisis par exemple parmi les argiles (bentonite, montmorillonite, attapulgite, argiles organophiles) ou les polymères organiques, par les nanotubes de carbone, au fur et à mesure de l'augmentation de la profondeur de forage, de la température de forage et/ou de la pression de forage. Il peut en effet être intéressant, principalement pour des raisons de coût de production des fluides de forage, d'utiliser en début de forage des agents épaississants connus et peu coûteux tels que les polymères organiques et/ou des argiles épaississantes, et de n'introduire les NTC qu'à partir d'une certaine profondeur lorsque la dégradation thermique des polymères organiques ou la teneur excessive en matières solides apportées par les argiles commence à poser les problèmes décrits en introduction.

L'invention sera mieux comprise à la lumière des exemples suivants, qui sont donnés à titre purement illustratif et n'ont pas pour but de limiter la portée de l'invention telle que définie par les revendications annexées.

### EXEMPLES

### Exemple 1 : Préparation d'un mélange-maître

On introduit, dans le puits d'alimentation de zone 1 d'un co-malaxeur BUSS® MDK 46 (L/D = 11), des nanotubes de carbone (Graphistrength® C100 d'ARKEMA). Une quantité pondérale d'huile minérale (EDC® 99 DW de TOTAL) identique à celle des NTC est introduite dans la pompe d'injection de la première zone de l'appareil, avant la première bague de restriction. Le malaxage est effectué à température ambiante. En sortie du co-malaxeur, on obtient des joncs solides qui sont découpés, sans utilisation de jet d'eau, pour obtenir un mélange-maître sous forme de granulés solides renfermant 50% en poids de NTC et 50% en poids d'huile.

### Exemple 2 : Préparation d'un mélange-maître

On introduit, dans le puits d'alimentation de zone 1 d'un co-malaxeur BUSS® MDK 46 (L/D = 11), des nanotubes de carbone (Graphistrength® C100 d'ARKEMA). Une quantité pondérale d'huile minérale (EDC® 99 DW de TOTAL) identique à celle des NTC est introduite dans la pompe d'injection de la première zone de l'appareil, avant la première bague de restriction. Le malaxage est effectué à température ambiante. En sortie du co-malaxeur, on obtient des joncs solides qui sont découpés, sans utilisation de jet d'eau, pour obtenir un mélange-maître sous forme de granulés solides renfermant 20% en poids de NTC et 80% en poids d'huile.

### Exemple 3 : Fabrication d'un fluide de forage

Le mélange-maître de l'Exemple 2 est imprégné de la même huile minérale que celle utilisée pour sa préparation, à raison de 1 partie en poids de mélange-maître pour 2 parties en poids d'huile, pendant au moins 8 heures. La suspension est ensuite rediluée dans la même huile pour atteindre un taux de NTC de 1% en poids. Cette suspension est alors soumise à un traitement mécanique dans un système rotor-stator (Silverson® L4RT de SILVERSON) pendant 10 minutes pour obtenir une dispersion de NTC stable, c'est-à-dire ne présentant pas de sédimentation apparente après 24 heures. Un agent alourdissant comme la baryte est ensuite introduit dans cette dispersion pour obtenir un fluide de forage.

## Revendications

1. Mélange-maître sous forme de granulés, comprenant au moins une huile et plus de 3% en poids de nanotubes de carbone ayant un diamètre moyen, mesuré par microscopie électronique en transmission, compris entre 5 et 30 nm et une surface spécifique, déterminée par la méthode BET par adsorption d'azote, supérieure à 200 m²/g, ladite huile étant choisie parmi : les huiles végétales comprenant au moins 50% de triglycérides constitués d'esters d'acides gras et de glycérol ; les huiles de synthèse de formule R5COOR6 dans laquelle R5 représente un groupe aryle ou le reste d'un acide gras supérieur, linéaire ou ramifié, comportant de 7 à 30 atomes de carbone et R6 représente une chaîne hydrocarbonée, ramifiée ou non, éventuellement hydroxylée, contenant de 3 à 30 atomes de carbone ; l'éther de pétrole ; les alcools gras, linéaires ou ramifiés, saturés ou insaturés, en C6 à C26 ; les hydrocarbures linéaires ou ramifiés ; les hydrocarbures cycliques ; les hydrocarbures aromatiques ; les perfluoralcanes en C8 à C24 ; les huiles fluorosiliconées ; et leurs mélanges.

2. Mélange-maître selon la revendication 1, **caractérisé en ce que** ladite au moins une huile est choisie parmi les huiles ayant une viscosité dynamique à 25°C comprise entre 0,lcp et 500cp.

3. Mélange-maître selon la revendication 1, **caractérisé en ce que** ladite au moins une huile est choisie parmi les huiles ayant une viscosité dynamique à 25°C comprise entre 0,3cp et 300cp.

4. Mélange-maître selon l'une quelconque des revendications 1 à 3. **caractérisé en ce qu'**il contient de 10 à moins de 60% en poids de nanotubes de carbone.

5. Mélange-maître selon l'une quelconque des revendications 1 à 4, **caractérisé en ce qu'**il renferme de 15 à 50% en poids de nanotubes de carbone.

6. Procédé de préparation du mélange-maître selon l'une quelconque des revendications 1 à 5, **caractérisé en ce qu'**il comprend les étapes consistant à :
(a) introduire puis malaxer les nanotubes et ladite au moins une huile, dans un dispositif de compoundage, tel qu'un co-malaxeur ou une extrudeuse bi-vis co-rotative ou contre-rotative, pour obtenir un composite,
(b) extruder puis refroidir ledit composite de façon à obtenir un mélange-maître sous forme solide,
(c) mettre en forme ledit mélange-maître pour obtenir des granulés.

7. Utilisation du mélange-maître selon l'une quelconque des revendications 1 à 5, ou obtenu suivant le procédé selon la revendication 6, pour la fabrication d'un fluide viscoélastique de forage dans des formations rocheuses souterraines, comprenant le mélange dudit mélange-maître avec une base liquide aqueuse et/ou organique et éventuellement au moins un agent alourdissant sous forme particulaire.

8. Procédé de fabrication d'un fluide viscoélastique de forage dans des formations rocheuses souterraines, comprenant le mélange du mélange-maître selon l'une quelconque des revendications 1 à 5, ou obtenu suivant le procédé selon la revendication 6, avec une base liquide aqueuse et/ou organique et éventuellement au moins un agent alourdissant sous forme particulaire.

9. Procédé selon la revendication 8, **caractérisé en ce que** ledit agent alourdissant a une masse volumique au moins égale à 2 g/cm³.

10. Procédé selon la revendication 8 ou 9, **caractérisé en ce que** l'agent alourdissant est la baryte.

11. Procédé selon l'une des revendications 8, 9 et 10, **caractérisé en ce que** le fluide viscoélastique contient de 0,1 à 6 % en poids de nanotubes de carbone.

12. Procédé selon l'une des revendications 8 à 11, **caractérisé en ce que** le mélange-maître et la base liquide sont soumis à un traitement mécanique à l'aide d'ultrasons ou d'un système rotor-stator ou d'un mélangeur à pales.

13. Procédé selon l'une quelconque des revendications 8 à 12, dans lequel le mélange maître est incorporé directement dans la formulation finale du fluide viscoélastique de forage.

## Patentansprüche

1. Masterbatch in der Form eines Granulats, umfassend mindestens ein Öl und mehr als 3 Gew.-% Kohlenstoff-Nanoröhrchen mit einem mittleren Durchmesser, gemessen durch Transmissionselektronenmikroskopie, zwischen 5 und 30 nm und einer spezifischen Oberfläche, bestimmt durch das BET-Verfahren durch Stickstoffadsorption, von mehr als 200 m²/g, wobei das Öl ausgewählt ist aus: Pflanzenölen, umfassend mindestens 50 % Triglyceride, bestehend aus Fettsäureestern und Glycerin; Syntheseölen mit der Formel R5COOR6, wobei R5 eine Arylgruppe oder den Rest einer höheren Fettsäure, linear oder verzweigt, mit 7 bis 30 Kohlenstoffatomen darstellt, und R6, eine Kohlenwasserstoffkette, verzweigt oder nicht, gegebenenfalls hydroxyliert, mit 3 bis 30 Kohlenstoffatomen darstellt; Petrolether; C6- bis C26-Fettalkoholen, linear oder verzweigt, gesättigt oder ungesättigt; linearen oder verzweigten Kohlenwasserstoffen; cyclischen Kohlenwasserstoffen; aromatischen Kohlenwasserstoffen; C8- bis C24-Perfluoralkanen; Fluorsilikonölen; und ihren Mischungen.

2. Masterbatch nach Anspruch 1,
**dadurch gekennzeichnet, dass** das mindestens eine Öl aus Ölen mit einer dynamischen Viskosität bei 25°C zwischen 0,1 cp und 500 cp ausgewählt ist.

3. Masterbatch nach Anspruch 1,
**dadurch gekennzeichnet, dass** das mindestens eine Öl aus Ölen mit einer dynamischen Viskosität bei 25°C zwischen 0,3 cp und 300 cp ausgewählt ist.

4. Masterbatch nach einem der Ansprüche 1 bis 3,
**dadurch gekennzeichnet, dass** dieser 10 bis weniger als 60 Gew.-% Kohlenstoff-Nanoröhrchen enthält.

5. Masterbatch nach einem der Ansprüche 1 bis 4,
**dadurch gekennzeichnet, dass** dieser 15 bis 50 Gew.-% Kohlenstoff-Nanoröhrchen enthält.

6. Verfahren zur Herstellung des Masterbatches nach einem der Ansprüche 1 bis 5,
**dadurch gekennzeichnet, dass** dieses die Schritte umfasst bestehend aus:
(a) Einbringen, dann Mischen der Nanoröhrchen des mindestens einen Öls in einer Compoundierungsvorrichtung, wie einem Co-Mischer oder einem co-rotativen oder gegenrotativen Doppelschneckenextruder, um einen Verbundstoff zu erhalten,
(b) Extrudieren, dann Abkühlen des Verbundstoffs, um einen Masterbatch in fester Form zu erhalten,
(c) Formen des Masterbatches, um ein Granulat zu erhalten.

7. Verwendung des Masterbatches nach einem der Ansprüche 1 bis 5, oder erhalten gemäß dem Verfahren nach Anspruch 6, zur Herstellung einer viskoelastischen Bohrflüssigkeit für unterirdische Gesteinsformationen, umfassend die Mischung des Masterbatches mit einer wässrigen und/oder organischen flüssigen Base und gegebenenfalls mindestens einem Beschwerungsmittel in Partikelform.

8. Verfahren zur Herstellung einer viskoelastischen Bohrflüssigkeit für unterirdische Gesteinsformationen, umfassend die Mischung des Masterbatches nach einem der Ansprüche 1 bis 5, oder erhalten gemäß dem Verfahren nach Anspruch 6, mit einer wässrigen und/oder organischen flüssigen Base und gegebenenfalls mindestens einem Beschwerungsmittel in Partikelform.

9. Verfahren nach Anspruch 8,
**dadurch gekennzeichnet, dass** das Beschwerungsmittel eine Volumenmasse von mindestens gleich 2 g/cm³ aufweist.

10. Verfahren nach Anspruch 8 oder 9,
**dadurch gekennzeichnet, dass** das Beschwerungsmittel Baryt ist.

11. Verfahren nach einem der Ansprüche 8, 9 und 10,
**dadurch gekennzeichnet, dass** die viskoelastische Flüssigkeit von 0,1 bis 6 Gew.-% Kohlenstoff-Nanoröhrchen enthält.

12. Verfahren nach einem der Ansprüche 8 bis 11,
**dadurch gekennzeichnet, dass** der Masterbatch und die flüssige Base einer mechanischen Behandlung mit Hilfe von Ultraschall oder einem Rotor-Stator-System oder einem Schaufelmischer unterworfen werden.

13. Verfahren nach einem der Ansprüche 8 bis 12,
wobei der Masterbatch direkt in die Endformulierung der viskoelastischen Bohrflüssigkeit eingeschlossen wird.

## Claims

1. Masterbatch in the form of granules comprising at least one oil and more than 3% by weight of carbon nanotubes having a mean diameter, measured by transmission electron microscopy, of between 5 and 30 nm and a specific surface area, determined by the nitrogen adsorption BET method, greater than 200 m²/g, said oil being chosen from: vegetable oils comprising at least 50% of triglycerides consisting of esters of fatty acids and of glycerol; synthetic oils of formula R₅COOR₆ in which R₅ represents an aryl group or the residue of a higher, linear or branched, fatty acid having 7 to 30 carbon atoms and R₆ represents a branched or unbranched hydrocarbon chain, possibly hydroxylated, containing 3 to 30 carbon atoms; petroleum ether; linear or branched, saturated or unsaturated, C₆ to C₂₆ fatty alcohols; linear or branched hydrocarbons; cyclic hydrocarbons; aromatic hydrocarbons; C₈ to C₂₄ perfluoroalkanes; fluorosilicone oils; and mixtures thereof.

2. Masterbatch according to Claim 1, **characterized in that** said at least one oil is chosen from oils having a dynamic viscosity at 25° C of between 0.1 cP and 500 cP.

3. Masterbatch according to Claim 1, **characterized in that** said at least one oil is chosen from oils having a dynamic viscosity at 25° C of between 0.3 cP and 300 cP.

4. Masterbatch according to any one of Claims 1 to 3, **characterized in that** it contains from 10 to less than 60% by weight of carbon nanotubes.

5. Masterbatch according to any one of Claims 1 to 4, **characterized in that** it contains 10 to 50% by weight of carbon nanotubes.

6. Process for producing a masterbatch according to any one of Claims 1 to 5, **characterized in that** it comprises the steps consisting in:
(a) introducing and then kneading the nanotubes and said at least one oil in a compounding device, such as a co-kneader or a co-rotating or counter-rotating twinscrew extruder, in order to obtain a composite;
(b) extruding and then cooling said composite so as to obtain a masterbatch in solid form; and
(c) forming said masterbatch in order to obtain granules.

7. Use of the masterbatch according to any one of Claims 1 to 5, or obtained by the process according to Claim 6, for the manufacture of a viscoelastic fluid for drilling subterranean rock formations, which comprises mixing said masterbatch with an aqueous and/or organic liquid base and optionally at least one weighting agent in particulate form.

8. Process for manufacturing a viscoelastic fluid for drilling in subterranean rock formations, which comprises mixing the masterbatch according to any one of Claims 1 to 5, or obtained by the process according to Claim 6, with an aqueous and/or organic liquid base and optionally at least one weighting agent in particulate form.

9. Process according to Claim 8, **characterized in that** said weighting agent has a density of at least 2 g/cm³.

10. Process according to either of Claims 8 and 9, **characterized in that** the weighting agent is barite.

11. Process according to one of Claims 8, 9 and 10, **characterized in that** the viscoelastic fluid contains 0.1 to 6% by weight of carbon nanotubes.

12. Process according to one of Claims 8 to 11, **characterized in that** the masterbatch and the liquid base are subjected to a mechanical treatment using ultrasound or a rotor-stator system or a blade mixer.

13. Process according to any one of Claims 8 to 12, in which the masterbatch is incorporated directly into the final formulation of the viscoelastic drilling fluid.
